# EUROPÄISCHE PATENTSCHRIFT

(11) **EP 0 485 869 B1**
(45) Veröffentlichungstag und Bekanntmachung des Hinweises auf die Patenterteilung: **22.02.1995**
(21) Anmeldenummer: 91118863.9
(22) Anmeldetag: 06.11.1991
(51) Int. Cl.: G01L 5/13, G01L 1/04, G01L 1/14, A01B 63/112

(54) **Kraftsensor zur Erfassung von Kräften zwischen Bauteilen**
Force transducer for determining the forces between two constructional elements
Transducteur de force pour déterminer les forces entre deux pièces de construction

(30) Priorität: 13.11.1990 US 611629
(43) Veröffentlichungstag der Anmeldung: 20.05.1992
(73) Patentinhaber: DEERE & COMPANY, Moline, Illinois 61265 (US)
(72) Erfinder: VanGerpen, Harlan Welbert, Cedar Falls, Iowa 50613 (US)
(74) Vertreter: Feldmann, Bernhard

(56) Entgegenhaltungen:
- GB-A- 2 151 361
- US-A- 3 033 032
- US-A- 3 213 678

## Beschreibung

Die Erfindung betrifft einen Kraftsensor zur Erfassung von zwischen zwei Kraftübertragungsteilen wirkenden Kräften, insbesondere für die Zugkraftregelung eines landwirtschaftlichen Schleppers, wobei die Kraftübertragungsteile durch einen Verbindungsbalken, der mit einer Kraftmeßeinrichtung zusammenwirkt, miteinander verbunden sind.

Für eine Zugkraftregelung eines landwirtschaftlichen Schleppers ist die Messung der Zugkraft erforderlich. In einigen von der Firma Deere & Company gefertigten Schleppertypen erfolgt dies durch eine hydraulische Zugkrafterfassung. Jeweils der mittlere Bereich zweier Winkelhebel ist an den gegenüberliegenden Enden einer Zugwelle befestigt. An einen ersten Schenkel jedes Winkelhebels ist ein Lenker angekoppelt. An dem jeweils zweiten Schenkel greift je ein hydraulischer Meßzylinder an, der sich anderenends am Schleppergehäuse abstützt. Mit der Einführung einer elektronischen Zugkraftregelung wurde der Meßzylinder durch ein Lastverbindungsstück ersetzt. Dieses Lastverbindungsstück weist in seinem mittleren Bereich eine Öffnung auf, in die ein Dehnungsmesser einsetzbar ist. Derartige Dehnungsmesser sind jedoch teuer, und die Meßanordnung weist wegen der Steifigkeit des Lastverbindungsstückes eine begrenzte Empfindlichkeit auf.

Aus Figur 1 der US-A-3033032 ist weiterhin ein Kraftwandler mit einem C-förmigen elastischen Verformungsteil und Kuppelbohrungen bekannt, wobei an dem Verformungsteil eine Art Differentialtransformatoranordnung angebracht ist.

Die der Erfindung zugrunde liegende Aufgabe wird darin gesehen, einen einfachen, kostengünstigen und empfindlichen Kraftsensor der eingangs genannten Art anzugeben, der zur Abgabe von Signalen an ein elektronisches Zugkraftsteuersystem geeignet ist. Als Meßeinrichtung soll dabei ein käuflicher Wegsensor einsetzbar sein.

Die Aufgabe wird ausgehend von dem Oberbegriff des Patentanspruches 1 durch dessen kennzeichnende Merkmale gelöst.

Der erfindungsgemäße Kraftsensor enthält ein im wesentlichen C-förmiges Teil, das durch einen Verbindungsbalken und an einer Seite jedes der Enden des Verbindungsbalkens angeformte Ansätze gebildet wird. In jedem Ansatz befinden sich Kupplungslöcher, die außerhalb des Verbindungsbalkens liegen. Zwischen den Ansätzen ist ein flexibler gebogener Streifen eingespannt. Ein Weggeber, beispielsweise ein geradliniges Potentiometer, ein geradlinig veränderbarer Spannungswandler, oder eine andere elektrische Einrichtung, die auf Wegänderungen anspricht, ist zwischen den Verbindungsbalken und einen mittleren Bereich des Streifens befestigt. Der Weggeber erfaßt die Änderungen des Abstandes zwischen dem Verbindungsbalken und Bogen des Streifens und erzeugt ein elektrisches Signal, das der Größe der an die Enden des C-förmigen Teils angelegten Kraft entspricht.

Einer bevorzugten Ausgestaltung der Erfindung zufolge sind die gegenüberliegenden Enden des flexiblen Streifens mit jeweils einem Ansatz über einstellbare Halter verbunden. Bei einer weiteren bevorzugten Ausgestaltung der Erfindung ist ein Ende des Streifens an einem Ansatz festgelegt und das andere Ende des Streifens ist einstellbar mit dem anderen Ansatz verbunden. In unbelastetem Zustand ist der Streifen gekrümmt und aus der Richtung des Verbindungsbalkens betrachtet konkav gekrümmt. Die einstellbaren Halteteile erlauben eine Einstellung der Bogenhöhe des Streifens, wodurch sich ein vorgeschriebenes elektrisches Signal für den unbelasteten Zustand während der Installation einstellen läßt.

Der erfindungsgemäße Kraftsensor wird vorzugsweise auf bekannte Weise zwischen eine Lasche, die mit dem Schleppergehäuse verbunden ist, und einem Arm eines Winkelhebels eingefügt. Die Last eines Lenkers wird dabei durch Bolzen auf die Kuppelöffnungen an den Enden des C-förmigen Teils übertragen. Da diese Öffnungen nicht in der Mittellinie des Verbindungsbalkens liegen, verbiegt sich das C-förmige Teil bei Belastung. Der flexible Streifen, der einen vorherbestimmbaren Bogen aufweist, wirkt als ein mechanischer Verstärker, da seine Montagelänge sich entsprechend der Ablenkung des Verbindungsbalkens ändert und die Bogenhöhe sich um einen größeren Betrag ändert als die Montagelänge. Der erfindungsgemäße Kraftsensor kann sowohl Zug- als auch Druckkräfte erfassen.

Weitere vorteilhafte Ausgestaltungen und Weiterbildungen der Erfindung gehen aus den Unteransprüchen hervor.

Anhand der Zeichnung, die zwei Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die perspektivische Darstellung eines erfindungsgemäßen Kraftsensors und
- Fig. 2: die perspektivische Darstellung einer alternativen Ausgestaltung eines erfindungsgemäßen Kraftsensors.

Der Kraftsensor 10 enthält ein im wesentlichen C-förmiges Teil 12, welches durch ein Verbindungsglied oder einen Verbindungsbalken 14, der zwei Ansätze 16, 18 trägt, gebildet ist. Die Ansätze 16, 18 springen an den beiden Enden des Verbindungsbalkens 14 zu einer seiner Seiten hervor. Jeder Ansatz 16, 18 weist Kuppelmittel, beispielsweise ein Kuppelloch 20 auf, an die nicht dargestellte Kraftübertragungsteile, die sich infolge einer Kraft aufeinander zu- oder voneinander wegbewegen, anschließbar sind. Die Achsen der Kuppellöcher 20 sind, wie aus der Zeichnung ersichtlich, senkrecht zu der durch den Verbindungsbalken 14 und die Ansätze 16, 18 aufgespannten Ebene.

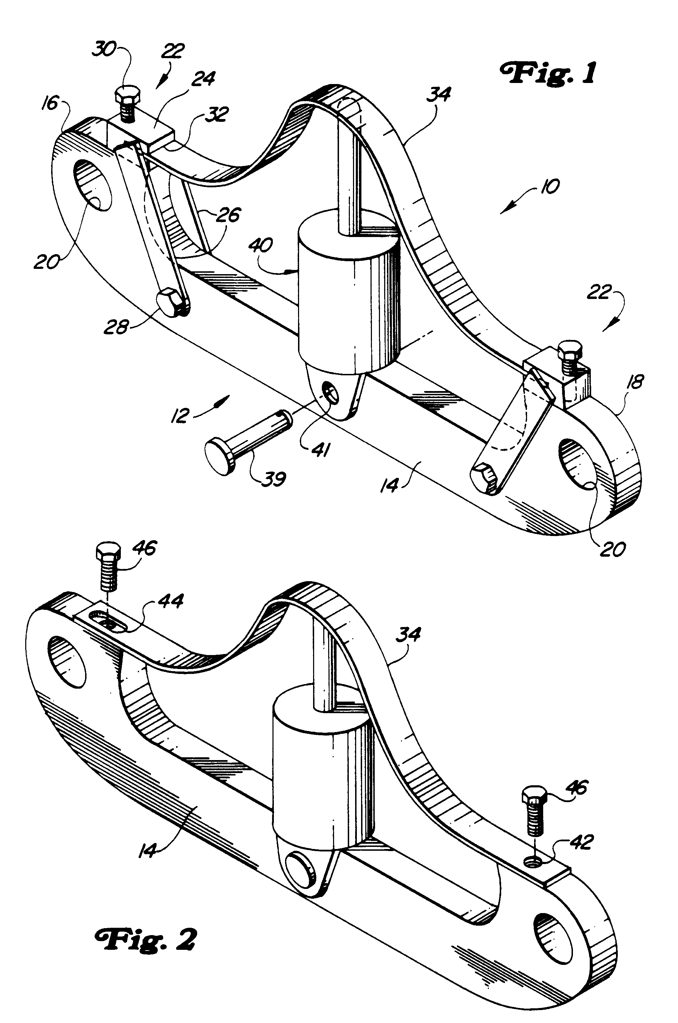

Gemäß Fig. 1 sind zwei Streifenhalter 22 nahe den sich gegenüberliegenden Enden des Verbindungsbalkens 14 an den Ansätzen 16, 18 befestigt. Jeder Streifenhalter 22 weist einen quader- oder kastenförmigen Körper 24 auf, der sich in der Nähe einer dem Verbindungsbalken 14 abgewandten Oberfläche eines der Ansätze 16, 18 befindet. An jedem Körper 24 sind zwei Schenkel 26 befestigt, beispielsweise festgeschweißt, und erstrecken sich in Richtung Verbindungsbalken 14. Die Enden der Schenkel 26 sind durch Bolzen 28 verschwenkbar am Verbindungsbalken 14 befestigt. Durch eine in jedem der Körper 24 enthaltene Gewindebohrung erstreckt sich eine Einstellschraube 30 und greift an der Oberfläche des zugehörigen Ansatzes 16, 18 an. Beim Verdrehen der Einstellschraube 30 wird der Körper 24 um die Achse der Bolzen verschwenkt. Jeder Körper 24 weist ferner einen Schlitz 32 auf, in dem jeweis ein Ende eines Bandes oder Streifens 34 befestigt ist.

Die Verbindungslinie zwischen den beiden Kuppellöchern 20 verläuft im wesentlichen parallel und beabstandet zu dem Verbindungsbalken 14 in einer Ebene zwischen dem Streifen 34 und der Mittellinie des Verbindungsbalkens 14. Der Streifen 34 ist wesentlich dünner und damit auch flexibler als der Verbindungsbalken 14. Der Streifen 34 weist eine gebogene Form auf und ist vom Verbindungsbalken 14 aus gesehen konkav durchgebogen, so daß sein mittlerer Bereich einen größeren Abstand zu dem Verbindungsbalken hat als seine beiden Enden. Bei der Montage zwischen den beiden Streifenhaltern 22 wird der Streifen 34 vorgespannt, so daß er im Sinne eines Auseinanderdrückens auf die Streifenhalter 22 wirkt und sich ein von dem Verbindungsbalken 14 weggerichteter Bogen ausbildet.

Ein kostengünstiger käuflicher Wegsensor oder Weggeber 40 ist zwischen dem Verbindungsbalken 14 und dem mittleren Bereich des Streifens 34 angeordnet. Er erfaßt Änderungen des Abstandes zwischen dem Verbindungsbalken 14 und dem mittleren Bereich des Streifens 34, die von Änderungen der an den Kraftsensor 10 angelegten Kraft herrühren. Bei dem Wegsensor 40 kann es sich um ein geradliniges Potentiometer, einen geradlinig veränderbaren Spannungswandler oder eine andere elektrische Einrichtung handeln, die auf Wegänderungen anspricht. Vorzugsweise ist der Wegsensor 40 durch einen Bolzen 39, welcher durch eine Bohrung 41 des Verbindungsbalkens 14 aufgenommen wird, schwenkbar an dem mittleren Bereich des Verbindungsbalkens 14 befestigt.

Arbeitskräfte werden vorzugsweise an den Kraftsensor 10 durch nicht dargestellte Bolzenmittel, die von den Kuppellöchern 20 aufgenommen werden, übertragen. Da die Kuppellöcher 20 nicht in der Mittellinie des Verbindungsbalkens 14 liegen, verbiegt sich beim Anlegen einer Kraft der Verbindungsbalken 14. Hierbei vergrößert oder verkleinert sich der Abstand zwischen den beiden Streifenbefestigungspunkten, und der mittlere Bereich des flexiblen Streifens 34 nähert sich an den Verbindungsbalken 14 an oder weicht von diesem zurück. Da die Länge zwischen den Befestigungspunkten des Streifens 34 größer ist als seine Bogenhöhe, ist der Betrag, um den sich die Bogenhöhe ändert, größer als die Abstandsänderung zwischen den Enden des Streifens 34. Damit wirkt der Streifen 34 als mechanischer Verstärker. Die Einstellschraube 30 kann verdreht werden, um das Ausmaß des Bogens in dem Streifen 34 und damit das Ausgangssignal des Wegsensors 40 einzustellen. Beispielsweise kann für den Fall, daß keine Kraft an dem C-förmigen Teil 12 anliegt, die Ausgangsspannung des Wegsensors 40 auf Null eingestellt werden.

Fig. 2 zeigt eine alternative Ausgestaltung der Erfindung, bei der der Streifen 34 auf einer Seite eine Durchsteckbohrung 42 und auf der anderen Seite ein Langloch 44 für Befestigungsschrauben 46 aufweist. Die Befestigung des Streifens 34 an dem C-förmigen Teil 12 erfolgt durch die Befestigungsschrauben 46, die durch die Durchsteckbohrung 42 und das Langloch 44 gesteckt und in Gewindebohrungen im C-förmigen Teil 12 eingeschraubt werden. Das Langloch 44 ermöglicht eine Einstellung der Bogenhöhe des Streifens 34.

## Patentansprüche

1. Kraftsensor zur Erfassung von zwischen zwei Kraftübertragungsteilen wirkenden Kräften, insbesondere für die Zugkraftregelung eines landwirtschaftlichen Schleppers, wobei die Kraftübertragungsteile durch einen zum Kraftsensor gehörenden Verbindungsbalken (14), der mit einer Kraftmeßeinrichtung zusammenwirkt, miteinander verbindbar sind, dadurch gekennzeichnet, daß im Bereich jedes der beiden Enden des Verbindungsbalkens (14) je wenigstens ein Ansatz (16, 18) derart angeformt ist, daß sich ein im wesentlichen C-förmig ausgebildetes Teil (12) ergibt, daß an den Ansätzen (16, 18) außerhalb der Mittellinie des Verbindungsbalkens (14) liegende Kuppelmittel, insbesondere Kuppelbohrungen (20), zur Befestigung der Kraftübertragungsteile vorgesehen sind, daß sich zwischen den Ansätzen (16, 18) ein flexibler Streifen (34) erstreckt, dessen Enden mit Befestigungsmitteln (22, 46) an den Ansätzen (16, 18) befestigt sind, und daß zwischen dem Verbindungsbalken (14) und einem mittleren Abschnitt des Streifens (34) ein Wegsensor (40) angeordnet ist, der Änderungen des Abstandes zwischen dem Verbindungsbalken (14) und dem Streifen (34) erfaßt.

2. Kraftsensor nach Anspruch 1, dadurch gekennzeichnet, daß der Streifen (34) wesentlich flexibler ist als das C-förmige Teil (12) und sich bei einer Kraftbeanspruchung und Biegung des C-förmigen Teils (12) verformt und sich dabei mit seinem mittleren Bereich dem Verbindungsbalken (14) annähert oder sich von diesem entfernt.

3. Kraftsensor nach Anspruch 1 oder 2, dadurch gekennzeichnet, daß die Verbindungslinie zwischen den Kuppelmitteln (20) zwischen dem Verbindungsbalken (14) und dem Streifen (34) liegt.

4. Kraftsensor nach einem der Ansprüche 1 bis 3, dadurch gekennzeichnet, daß der Streifen (34) aus der Richtung des Verbindungsbalkens (14) gesehen konkav gebogen ist und mit seinen Enden näher zum Verbindungsbalken (14) liegt als mit seinem mittleren Bereich.

5. Kraftsensor nach einem der Ansprüche 1 bis 4, dadurch gekennzeichnet, daß wenigstens ein Befestigungsmittel (22, 46) Mittel (30) zur Einstellung der Lage eines Endes des Streifens (34) bezüglich des zugehörigen Ansatzes (16) aufweist.

6. Kraftsensor nach Anspruch 5, dadurch gekennzeichnet, daß die Einstellmittel einen Bolzen (30) enthalten, der durch eine Gewindedurchgangsbohrung eines Streifenhalters (22) schraubbar ist und sich mit seinem freien Ende gegen die Oberfläche des Ansatzes (16) abstützt (Fig. 1).

7. Kraftsensor nach einem der Ansprüche 1 bis 6, dadurch gekennzeichnet, daß der Streifen (34) durch eine Vorspannung vorgespannt ist, welche die Befestigungsmittel (22, 46) und die Ansätze (16, 18) voneinander wegdrückt.

8. Kraftsensor nach einem der Ansprüche 1 bis 7, dadurch gekennzeichnet, daß das Befestigungsmittel (22) einen Körper (24) mit einem Schlitz (32) zur Aufnahme eines Endes des Streifens (34) enthält und daß an dem Körper (24) Schenkel (26) befestigt sind, deren freie Enden gelenkig mit dem Verbindungsbalken (14) verbunden sind.

9. Kraftsensor nach einem der Ansprüche 1 bis 8, dadurch gekennzeichnet, daß der gebogene flexible Streifen (34) eine Bogenhöhe aufweist, die kleiner ist als der Abstand zwischen den Befestigungsmitteln (22).

10. Kraftsensor nach einem der Ansprüche 1 bis 9, dadurch gekennzeichnet, daß es sich bei den Befestigungsmitteln um jeweils eine Befestigungsschraube (46) handelt, die durch eine Bohrung (42, 44) am Ende des Streifens (34) gesteckt und in eine Gewindebohrung im Ansatz (16, 18) einschraubbar ist, und daß wenigstens eine Bohrung des Streifens ein sich in Streifenlängsrichtung erstreckendes Langloch (44) ist (Fig. 2).

## Claims

1. A force transducer for determining forces acting between two force-transmitting parts, especially for draft load control of an agricultural tractor, wherein the force-transmitting parts can be coupled together by a connecting beam (14) which forms part of the force transducer and cooperates with a force measuring device, characterized in that at least one projection (16, 18) is formed in the region of each end of the connecting beam (14) in such a manner that a substantially C-shaped part (12) results, in that coupling means, especially coupling bores (20) are provided on the projections (16, 18) outside the centre line of the connecting beam (14), for fixing the force-transmitting parts, in that a flexible strip (34) extends between the projections (16, 18) with its ends fixed to the projections (16, 18) by fixing means (22, 46) and in that a displacement sensor (40) is arranged between the connecting beam (14) and a central section of the strip (34) to detect the alterations in the distance between the connecting beam (14) and the strip (34).

2. A force transducer according to claim 1, characterized in that the strip (34) is substantially more flexible than the C-shaped part (12) and deforms when the C-shaped part (12) is stressed and bows and its central region approaches or moves away from the connecting beam (14).

3. A force transducer according to claim 1 or 2, characterized in that the connecting line between the coupling means (20) lies between the connecting beam (14) and the strip (34).

4. A force transducer according to any of claims 1 to 3, characterized in that the strip (34) is concavely bowed as seen from the direction of the connecting beam (14) and lies nearer to the connecting beam (14) at its ends that at its central region.

5. A force transducer according to any of claims 1 to 4, characterized in that at least one fixing means (22, 46) has means (30) for adjusting the position of one end of the strip (34) relative to the associated projection (16).

6. A force transducer according to claim 5, characterized in that the adjusting means comprise a bolt (30) which can be screwed through a threaded through bore of a strip holder (22) and whose free end bears against the surface of the projection (16) (Figure 1).

7. A force transducer according to any of claims 1 to 6, characterized in that the strip (34) is pre-stressed by a pre-stress which urges the fixing means (22, 46) and the projections (16, 18) apart.

8. A force transducer according to any of claims 1 to 7, characterized in that the fixing means (22) includes a body (24) with a slot (32) for reception of an end of the strip (34) and in that arms (26) are fixed on the body (24), with their free ends articulated to the connecting beam (14).

9. A force transducer according to any of claims 1 to 8, characterized in that the bowed flexible strip (34) has a height of bow which is smaller than the distance between the fixing means (22).

10. A force transducer according to any of claims 1 to 9, characterized in that each fixing means is a fixing screw (46) which passes through a hole (42, 44) at the end of the strip (34) and can be screwed into a threaded bore in the projection (16, 18), and in that at least one hole of the strip is a slot (44) extending in the longitudinal direction of the strip (Figure 2).

## Revendications

1. Transducteur de force pour la détection de forces agissant entre deux parties de transmission de force, notamment pour le réglage de la force de traction d'un tracteur agricole, et dans lequel les parties de transmission de la force peuvent être reliées entre elles au moyen d'une barre de liaison (14), qui fait partie du transducteur de force et qui coopère avec un appareil de mesure dynamométrique, caractérisé en ce qu'au niveau de chacune des deux extrémités de la barre de liaison (14) respectivement au moins une partie saillante (16,18) est formée de telle sorte qu'on obtient une partie (12) agencée sensiblement en forme de C, que des moyens d'accouplement, notamment des perçages d'accouplement (20), situés dans les parties saillantes (16,18) en dehors de l'axe médian de la barre de liaison (14), sont prévus pour la fixation des parties de transmission de force, qu'entre les parties saillantes (16,18) s'étend une bande flexible (34), dont les extrémités sont fixées par des moyens de fixation (22,48) sur les parties saillantes (16,18), et qu'entre la barre de liaison (14) et une section médiane de la bande (34) est disposé un capteur de déplacement (40), qui détecte des variations de la distance entre la barre de liaison (14) et la bande (34).

2. Transducteur de force selon la revendication 1, caractérisé en ce que la bande (34) est nettement plus flexible que la partie en forme de C (12) et se déforme dans le cas de l'application d'une force et du fléchissement de la partie en forme de C (12) et, par sa partie médiane, se rapproche ou s'écarte de la barre de liaison (14).

3. Transducteur de force selon la revendication 1 ou 2, caractérisé en ce que la droite reliant les moyens d'accouplement (20) est située entre la barre de liaison (14) et la bande (34).

4. Transducteur de force selon l'une des revendications 1 à 3, caractérisé en ce que la bande (34) est cintrée avec une forme concave lorsqu'on regarde dans la direction de la barre de liaison (14) et que ses extrémités sont plus rapprochées que sa partie médiane de la barre de liaison (14).

5. Transducteur de force selon l'une des revendications 1 à 4, caractérisé en ce qu'au moins un moyen de fixation (22,46) possède des moyens (30) pour régler la position d'une extrémité de la bande (34) par rapport à la partie saillante associée (16).

6. Transducteur de force selon la revendication 5, caractérisé en ce que les moyens de réglage contiennent un boulon (30), qui peut être vissé à travers un perçage taraudé traversant d'un dispositif (22) de retenue de la bande et prend appui, par son extrémité libre, contre la surface de la partie saillante (16) (figure 1).

7. Transducteur de force selon l'une des revendications 1 à 6, caractérisé en ce que la bande (34) est précontrainte au moyen d'une précontrainte qui repousse l'un de l'autre les moyens de fixation (46) et les parties saillantes (16,18).

8. Transducteur de force selon l'une des revendications 1 à 7, caractérisé en ce que le moyen de fixation (22) contient un corps (24) possédant une fente (32) servant à loger une extrémité de la bande (34) et que sur le corps (24) sont fixées des branches (26), dont les extrémités libres sont reliées d'une manière articulée à la barre de liaison (14).

9. Transducteur de force selon l'une des revendications 1 à 8, caractérisé en ce que la bande flexible cintrée (34) possède une hauteur d'arc qui est inférieure à la distance entre les moyens de fixation (22).

10. Transducteur de force selon l'une des revendications 1 à 9, caractérisé en ce qui concerne les moyens de fixation, il s'agit respectivement d'une vis de fixation (46), qui est enfichée dans un perçage (42,44) situé à l'extrémité de la bande (34) et peut être vissée dans un perçage taraudé ménagé dans la partie saillante (16,18), et qu'au moins un perçage de la bande est un trou allongé (44), qui s'étend dans la direction longitudinale de la bande (figure 2).
